# FASCICULE DE BREVET EUROPEEN

(11) **EP 2 794 375 B1**
(45) Date de publication et mention de la délivrance du brevet: **10.08.2016**
(21) Numéro de dépôt: 12806559.6
(22) Date de dépôt: 23.11.2012
(51) Int. Cl.: B60W 10/06, B60W 10/08, B60W 30/18, B60W 10/26

(54) **PROCÉDÉ DE GESTION DE L'ÉNERGIE ÉLECTRIQUE D'UN VÉHICULE AUTOMOBILE ET VÉHICULE AUTOMOBILE METTANT EN OUVRE UN TEL PROCÈDE**
VERFAHREN ZUR VERWALTUNG VON ELEKTRIZITÄT BEI EINEM KRAFTFAHRZEUG UND KRAFTFAHRZEUG MIT EINEM SOLCHEN VERFAHREN
METHOD FOR MANAGING ELECTRICITY IN A MOTOR VEHICLE, AND MOTOR VEHICLE IMPLEMENTING SUCH A METHOD

(30) Priorité: 21.12.2011 FR 1162126
(43) Date de publication de la demande: 29.10.2014
(73) Titulaire: Peugeot Citroën Automobiles SA, 78140 Vélizy Villacoublay (FR)
(72) Inventeur: COMTE, Raphael, F-77380 Combs La Ville (FR); BELKHIRI, Abdeslam, F-92110 Clichy (FR); BOUCLY, Bernard, F-78150 Le Chesnay (FR)
(86) Numéro de dépôt international: PCT/FR2012/052709
(87) Numéro de publication internationale: WO 2013/093269

(56) Documents cités:
- DE-A1-102009 008 393
- FR-A1- 2 805 222
- FR-A1- 2 816 661
- FR-A1- 2 816 664
- FR-A1- 2 920 474
- US-A1- 2009 301 061

## Description

### Domaine technique de l'invention

L'invention concerne un procédé de gestion de l'énergie électrique en phase de régénération d'un filtre placé dans la ligne d'échappement d'un moteur thermique équipant un véhicule.
L'invention porte aussi sur un véhicule automobile mettant en oeuvre un tel procédé.

### Arrière-plan technologique

La pollution provoquée par les véhicules automobiles est devenue un sujet d'actualité vu le nombre important et croissant de véhicules circulant dans le monde. Les constructeurs automobiles s'efforcent de diminuer ou même d'éliminer la pollution de leurs véhicules par différents moyens, par exemple en diminuant la consommation de carburant et / ou en filtrant les gaz d'échappement qui sont rejetés. Ces derniers peuvent en effet contenir des particules qui sont rejetés dans l'atmosphère malgré le danger potentiel qu'elles représentent pour la santé.

Des filtres à particules ont alors été développés et équipent maintenant de plus en plus de véhicules. Ces filtres sont généralement constitués par des blocs cylindriques en céramique formant une multitude de canaux parallèles de petits diamètres (de l'ordre de la dizaine de microns). Les gaz d'échappement traversent le filtre à particules et les particules qu'ils contiennent sont piégées dans les canaux. Ces filtres à particules fonctionnent correctement mais présentent cependant l'inconvénient de devoir être régénérés régulièrement pour éliminer les particules qui tendent à obstruer les canaux du filtre. L'élimination des particules s'effectuent généralement par combustion en chauffant le filtre. Cette opération peut être effectuée automatiquement sur véhicule lors d'une phase dite de régénération en augmentant la charge imposée au moteur thermique ce qui provoque une augmentation de la température des gaz d'échappement, qui élève à son tour la température du filtre à particules jusqu'à atteindre la température suffisante pour permettre la combustion des particules piégées.

Classiquement, la charge du moteur thermique est augmentée en faisant fonctionner une machine électrique telle qu'un alternateur relié au moteur thermique et prélevant du couple sur celui-ci. Un système d'aide à la régénération d'un filtre intégré à une ligne d'échappement d'un moteur thermique, le moteur étant associé à une machine électrique réversible est connu par exemple du document FR2816661A1.

On connait du document FR2920474 un exemple de procédé d'aide à la régénération d'un filtre à particules placé dans la ligne d'échappement d'un moteur thermique équipant un véhicule muni d'une machine électrique telle qu'un alternateur, un réseau de bord comprenant des consommateurs électriques, un stockeur d'énergie électrique, le réseau de bord et le stockeur étant reliés à la machine électrique.

Dans ce procédé, en cas de détection d'un besoin de régénération du filtre à particules, l'énergie électrique est gérée de la façon suivante :
Dans une première étape de préparation le stockeur d'énergie électrique est déchargé en alimentant des consommateurs électriques du réseau de bord jusqu'à un niveau de charge minimum déterminé puis dans la seconde phase de régénération proprement dite du filtre, la machine électrique prélève du couple au moteur thermique. Le courant produit par la machine électrique est utilisé à la recharge du stockeur d'énergie.

Cependant ce procédé présente plusieurs inconvénients :
- Tant que l'on décharge le stockeur, on ne prélève pas de couple et on ne contribue donc pas à la régénération du filtre à particules, ce qui augmente le temps global de régénération.
- Dans l'architecture présentée, les stockeurs ne sont pas isolés, le générateur alimente à la fois le stockeur et le réseau de bord, il n'y a donc aucune maîtrise du courant de recharge du stockeur.
- La recharge et la décharge des stockeurs est directement dépendant de l'état du générateur et de l'état des consommateurs alimentés par le générateur. La stratégie n'est pas optimale car il n'y a pas de maîtrise de la recharge de la batterie : il y a potentiellement un risque de dégradations des prestations électriques du véhicule ainsi que des risques sécuritaires.

Il existe donc un besoin d'amélioration de la stratégie de gestion de l'énergie électrique pendant une phase de régénération d'un filtre à particules de véhicule dans la perspective de limiter au mieux la consommation du véhicule, tout en conservant des prestations optimales des organes électriques de réseau de bord.

L'invention porte ainsi sur un procédé de gestion de l'énergie électrique lors d'une phase de régénération d'un filtre placé dans la ligne d'échappement d'un moteur thermique équipant un véhicule muni d'un stockeur d'énergie électrique, un réseau de bord comprenant des consommateurs électriques, un générateur à tension de consigne continue modulable, un convertisseur DC/DC comprenant une entrée reliée au stockeur d'énergie électrique ainsi qu'une sortie reliée au réseau de bord et au générateur, des moyens de contrôle permettant de piloter le convertisseur DC/DC ainsi que le générateur, dans lequel on active les consommateurs électriques du réseau de bord afin d'augmenter la charge du moteur thermique, caractérisé en que l'on recharge le stockeur en phase d'injection de carburant du moteur thermique et l'on décharge le stockeur en phase de coupure d'injection de carburant du moteur thermique.

De préférence, on décharge le stockeur en phase de coupure d'injection de carburant si sa quantité d'énergie électrique disponible est supérieure à un seuil critique de quantité d'énergie électrique.

Dans une variante, en cas de décharge en phase de coupure d'injection on détermine pour le convertisseur DC/DC une consigne de courant maximum supérieure au courant requis par le réseau de bord, une consigne de tension à la sortie du convertisseur DC/DC égale à la tension requise par le réseau de bord et une tension de consigne du générateur inférieure à la tension de consigne du convertisseur DC/DC.

De préférence, on diminue progressivement la tension de consigne du générateur en deçà de la consigne de tension du convertisseur DC/DC.

Dans une variante, on recharge le stockeur en phase d'injection de carburant si sa quantité d'énergie électrique disponible est inférieure à un seuil haut maximum de quantité d'énergie électrique pour lequel on considère que ledit stockeur n'est plus apte à la recharge.

De préférence, en cas de recharge du stockeur en phase d'injection de carburant on détermine pour le convertisseur DC/DC une consigne de courant maximum à envoyer à la batterie inférieure à la différence entre la charge de courant maximum du générateur et le courant requis par le réseau de bord, une consigne de tension à l'entrée du convertisseur DC/DC destinée à protéger la batterie lors de la recharge ,une tension de consigne du générateur égale à la tension requise par le réseau de bord.

De préférence encore, la consigne de courant maximum est déterminée de sorte à garantir aussi un niveau de charge du générateur compris entre un niveau de charge minimum et un premier niveau de charge haut.

De préférence encore, dans le cas où l'activation supplémentaire d'un consommateur électrique prévu pour l'aide à la régénération entraine le dépassement d'un second niveau de charge haut, on effectue une décharge du stockeur.

De préférence encore, le second niveau de charge haut est supérieur au premier niveau de charge haut.

Dans une variante, si le stockeur dispose d'une quantité d'énergie électrique supérieure au seuil haut maximum, on décharge en partie le stockeur.

L'invention porte aussi sur un véhicule équipé d'une architecture électrique comprenant un stockeur d'énergie électrique, un réseau de bord, un générateur à tension de consigne continue modulable, un convertisseur DC/DC comprenant une entrée reliée au stockeur d'énergie électrique ainsi qu'une sortie reliée au réseau de bord et au générateur, des moyens de contrôle du convertisseur DC/DC ainsi que du générateur, caractérisé en ce que les moyens sont configurés pour la mise en oeuvre du procédé de l'invention.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un mode de mise en oeuvre de l'invention pour un véhicule automobile.
- La figure 2 représente un logigramme général de la procédure de l'invention.
- La figure 3 illustre au cours d'une phase de régénération l'augmentation de la charge de courant du réseau de bord en fonction de l'activation de consommateurs électriques ainsi que la capacité maximum de production de l'alternateur.
- La figure 4 présente un logigramme de l'étape de gestion la décharge de la batterie.
- La figure 5 présente un logigramme de l'étape 130 de gestion de la recharge de la batterie.

### Description détaillée

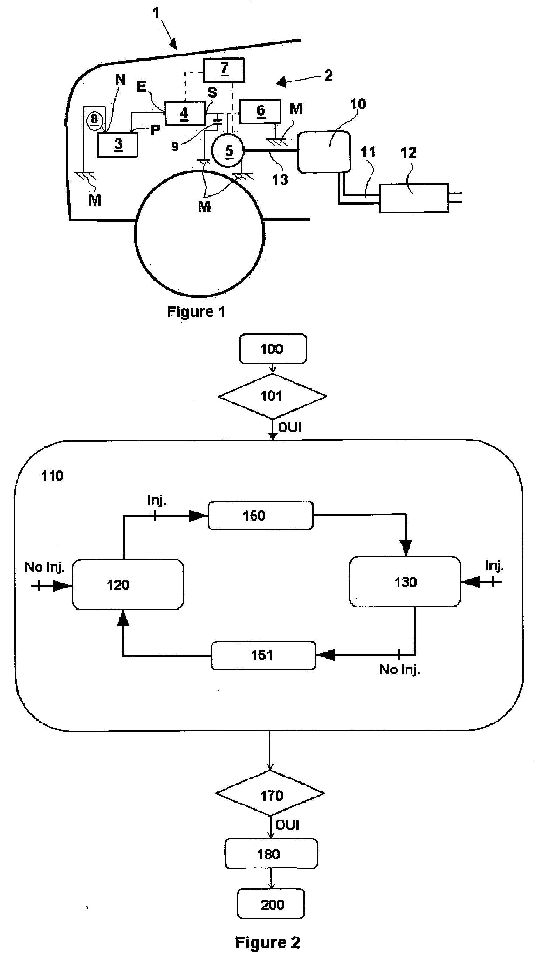

Sur la figure 1, le véhicule comporte une architecture électrique 2 comprenant un réseau de bord 6 alimenté en courant continu. Le réseau de bord 6 regroupe des organes électriques se comportant comme des consommateurs électriques dans le véhicule, et tolérant des variations de tension d'alimentation dans une certaine plage, par exemple entre 10,5 V et 16 V, comme par exemple l'éclairage du véhicule, un ordinateur de bord, un groupe de climatisation lorsque celui-ci est alimenté électriquement.

L'architecture électrique 2 comprend également un générateur 5 à tension de consigne continue modulable, comme par exemple un alternateur 5 piloté dont la tension de consigne, U_{ConsAlt}, lorsque celui-ci est en fonctionnement, est peut être fixée entre un seuil minimum, par exemple de 12 V, et un seuil maximum, par exemple de 15 V. L'alternateur 5 délivre un courant continu. A cet effet, il comprend des moyens de redressement du courant. La tension de consigne de l'alternateur 5 est adaptée à la tension requise par le réseau de bord 6 pour son bon fonctionnement. L'alternateur 5 est directement relié au réseau de bord 6. Un condensateur de filtrage 9 peut avantageusement être placé en parallèle de l'alternateur 5. De préférence, la capacité maximum de production électrique de l'alternateur 5 est inférieure au besoin électrique maximum requis par le réseau de bord 6 pour des raisons de compromis entre son coût et sa puissance.

L'architecture électrique 2 comprend encore un stockeur d'énergie électrique comme par exemple une batterie 3 très basse tension, telle qu'une batterie dite 12V au plomb. La tension que peut délivrer la batterie 3 est dépendante de son état de charge. Classiquement, la tension que peut délivrer la batterie 3 est comprise entre une tension minimum de l'ordre de 11,8 V lorsque son état de charge est faible, autrement dit environ 0% et une tension maximum de l'ordre de 12,8V pour une batterie dite de 12V, lorsque son état de charge est élevé, soit proche de 100%.

L'architecture électrique 2 comprend également un convertisseur continu/continu 4 (encore désigné ici comme convertisseur DC/DC) permettant d'alimenter le réseau de bord 6 à partir de la batterie 3. Le convertisseur continu/continu 4 comprend une borne d'entrée E et une borne de sortie S. La borne d'entrée E est raccordée à une borne positive P de la batterie 3. La batterie 3 comprend une borne négative N raccordée à une masse électrique M. La batterie 3 peut également être équipée d'un dispositif 8 disposé sur la borne négative N permettant de mesurer son état de charge. Le réseau de bord 6 est raccordé entre la borne de sortie S et la borne négative N de la batterie 3 par l'intermédiaire de la masse électrique M. L'alternateur 5 est aussi raccordé entre la borne de sortie S et la borne négative N de la batterie 3 par l'intermédiaire de la masse électrique M.

L'architecture électrique 2 comprend de plus des moyens de contrôle 7 assurant le pilotage du convertisseur DC/DC 4 et de l'alternateur 5.

Le convertisseur DC/DC 4 peut être piloté selon au moins les modes de fonctionnement suivants :
- un mode passant : le convertisseur DC/DC 4 se comporte comme un interrupteur fermé,
- un mode ouvert : le convertisseur DC/DC 4 se comporte comme un interrupteur ouvert,
- un mode élévateur ou abaisseur de tension de la sortie S par rapport à l'entrée E pour un courant circulant dans le convertisseur DC/DC 4 de l'entrée E vers la sortie S, ce qui permet de fournir du courant au réseau de bord 6.

Le convertisseur DC/DC 4 peut être un convertisseur DC/DC réversible, auquel cas il peut aussi être piloté selon le mode de fonctionnement suivant :
- un mode élévateur ou abaisseur de tension de l'entrée E par rapport à la sortie S pour un courant circulant dans le convertisseur DC/DC 4 de la sortie S vers l'entrée E, ce qui permet d'envoyer du courant vers la batterie et de la recharger.

Ces modes de fonctionnement permettent d'obtenir à volonté une tension coté batterie égale ou différente de la tension coté réseau de bord.

Le véhicule comporte en outre un moteur thermique 10 et une ligne d'échappement 11 par laquelle sont évacués les gaz d'échappement produits par le moteur thermique. Un filtre à particules 12 est placé dans la ligne d'échappement 11. L'alternateur 5 est couplé par un rotor 13 à l'arbre de sortie du moteur thermique 10 et prélève une énergie mécanique (un couple mécanique) au moteur thermique 10 afin de fournir du courant électrique.

L'alternateur 5 est normalement la source principale d'énergie, il alimente le réseau de bord 6 dans la limite de ses capacités de production. Afin de fournir l'énergie électrique requise pour le bon fonctionnement du réseau de bord 6, il prélève typiquement du couple sur le moteur thermique. L'alternateur 5 est normalement utilisé en générateur de courant régulé en tension, c'est-à-dire qu'il impose donc sa tension de consigne, U_{ConsAlt}, au réseau de bord 6.

L'ensemble batterie 3 - convertisseur DC/DC 4 est la source secondaire d'énergie électrique, il est utilisé pour réduire temporairement le couple prélevé sur le moteur thermique, donc la consommation de carburant. L'ensemble batterie 3 - convertisseur DC/DC 4 est normalement utilisé en générateur de courant pur afin de ne pas imposer sa tension au réseau de bord 6.

L'intérêt d'utiliser l'ensemble batterie 3 - convertisseur DC/DC 4 comme d'un second générateur permet d'optimiser le rendement énergétique électrique du réseau de bord 6 du véhicule en exploitant l'énergie électrique emmagasinée dans la batterie 3. Cette énergie emmagasinée a un coût inférieur à celui que l'alternateur 5 prélève au moteur thermique puisqu'elle est récupérée de préférence lors de phases de récupération d'énergie où le moteur ne consomme pas de carburant.

La figure 2 présente maintenant un logigramme de la procédure de l'invention dans lequel les étapes 100 et 200 correspondent respectivement aux étapes d'entrée et de sortie de ladite procédure. La procédure est réalisée en boucle afin de s'actualiser en fonction de l'évolution de la situation de vie du véhicule.

A l'étape 101 on vérifie qu'une régénération du filtre à particules est demandée. Tant qu'une demande de la régénération n'est pas détectée, la procédure réalise en boucle l'étape 101.

Dans le cas où la régénération est demandée, on passe (branche OUI partant de l'étape 101) à l'étape 110 dans laquelle on initialise la phase de régénération du filtre à particules.

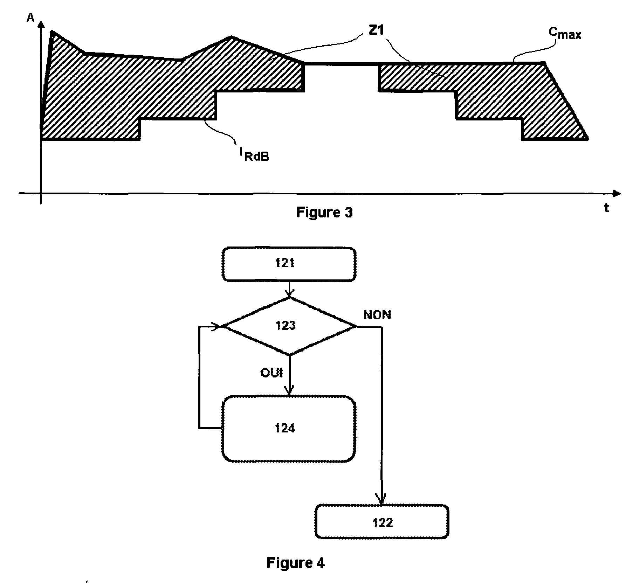

Au cours de cette étape 110, on active un nombre déterminé de consommateurs électriques du réseau de bord 6 prévus pour l'aide à la régénération afin d'augmenter la charge du moteur thermique. Les consommateurs électriques sont avantageusement activés successivement de sorte à augmenter progressivement la charge prélevée au moteur thermique. Le fait d'activer progressivement les consommateurs permet de s'assurer de la possibilité d'activer un étage suivant, cela évite des activations ou des désactivations intempestives dans le cas d'une temporisation très courte. Cela permet également de garder le contrôle sur la tension du réseau de bord. L'augmentation progressive de l'activation des consommateurs électrique est encore désignée ici par le terme de lestage. Comme l'illustre la figure 3, l'activation successive des consommateurs électriques du réseau de bord 6 peut se faire avec une temporisation tant que l'alternateur 5 n'est pas saturé. La charge de courant du réseau de bord 6 augmente alors par palier. Sur la figure 3, la courbe Cₘₐₓ désigne la charge de courant maximum que peut produire l'alternateur 5, celle-ci étant variable en fonction notamment du régime moteur. La capacité maximum de production électrique de l'alternateur correspond donc à la charge de courant maximum délivrée au régime maximum. La courbe I_{Rbd} présente la charge de courant utilisée par les consommateurs électriques activés pour la régénération du filtre à particules. La zone hachurée Z1 représente donc la charge de courant d'alternateur non exploitée pour l'aide à la régénération du filtre à particules.

Au cours de cette étape 110, on vérifie aussi si le moteur thermique 10 est en phase d'injection de carburant ou non.

Dans le cas où une phase d'injection de carburant est détectée (entrée « Inj. » sur la figure 2), on entre à l'étape 130 de gestion de la recharge de la batterie 3.

Dans le cas contraire, c'est-à-dire si une coupure d'injection de carburant est détectée (entrée « No Inj. » sur la figure 2), on entre à l'étape 120 de gestion de la décharge de la batterie 3.

Dans le cadre d'une régénération de filtre à particules, l'objectif est de prélever un maximum de couple au moteur thermique pour augmenter sa charge et faciliter la montée en température du filtre à particules par la combustion du carburant. Dans ce but, le prélèvement du couple doit donc être prélevé de préférence pendant les phases d'injection de carburant.

Avant de décharger la batterie 3, il faut toutefois s'assurer de son état de charge, autrement dit de sa quantité d'énergie électrique disponible.

La figure 4 présente maintenant un logigramme plus détaillé de l'étape 120 de gestion de la décharge de la batterie 3 dans lequel les étapes 121 et 122 correspondent respectivement aux étapes d'entrée et de sortie de l'étape 120.

Dans cette étape, il est prévu de vérifier tout d'abord à l'étape 123 si la batterie 3 dispose d'une quantité d'énergie électrique Q_{bat} supérieure à un seuil critique de quantité d'énergie électrique, S_{c}. La quantité d'énergie électrique détenue par la batterie 3 peut être connue par exemple à partir de la détermination de grandeurs physiques représentatives, c'est-à-dire qui est l'image d'une quantité d'énergie électrique telles que l'état de charge de la batterie 3.

Le seuil critique d'énergie électrique, S_{c}, correspond à la quantité d'énergie électrique minimum à maintenir dans la batterie 3 pour garantir les prestations électriques du véhicule, ou par exemple le démarrage après une période d'arrêt prolongé du véhicule.

La capacité d'une batterie à se recharger étant dépendante de sa température, le seuil critique d'énergie électrique, S_{c}, peut être variable et ajusté par exemple en fonction de la température de la batterie 3. Afin d'affiner la détermination du seuil d'énergie critique, S_{c}, il peut être prévu de déterminer celui-ci en fonction d'autres paramètres d'influence telles que l'état de charge actuel, le vieillissement de la batterie, la résistance interne.

Dans le cas où la quantité d'énergie électrique Q_{bat} est supérieure au seuil critique de quantité d'énergie électrique, S_{c} (branche OUI partant de l'étape 123), on passe à l'étape 124. Dans le cas contraire on passe à l'étape 122 de sortie.

A l'étape 124, si la quantité d'énergie électrique Q_{bat} est supérieure au seuil critique de quantité d'énergie électrique, S_{c}, on décharge la batterie 3 dans le réseau de bord 6.

Toutefois, si pendant cette étape 120 de gestion de la décharge, une phase d'injection de carburant est détectée (sortie « Inj. » à l'étape 120 de la figure 2) on sort de l'étape 120, on cesse d'appliquer les consignes (étape 150) et on entre à l'étape 130 de gestion de la recharge de la batterie 3.

Afin de décharger la batterie 3 dans le réseau de bord 6 on détermine donc pour le convertisseur DC/DC 4 une consigne de courant maximum, Iₘₐₓ, supérieure au courant requis I_{Rdb} par le réseau de bord 6, une consigne de tension, U_{ConsDC} à la sortie S du convertisseur DC/DC 4 égale à la tension requise, U_{RdB}, par le réseau de bord 6 et une tension de consigne U_{ConsAlt} de l'alternateur 5 inférieure à la tension de consigne U_{ConsDC} du convertisseur DC/DC 4. Les moyens de contrôle 7 pilotent le convertisseur DC/DC 4 et l'alternateur 5 aux consignes déterminées. En imposant une consigne de courant maximum, Iₘₐₓ, supérieure au courant requis I_{Rdb} par le réseau de bord 6, la fourniture au juste nécessaire du courant requis I_{Rdb} par le réseau de bord 6 sera atteinte lorsque la tension du réseau de bord sera égale à la tension de consigne U_{ConsDC} du convertisseur DC/DC 4.

En effet, lorsque la tension de consigne U_{ConsAlt} de l'alternateur 5 devient inférieure à la tension de consigne U_{ConsDC} du convertisseur DC/DC 4 l'alternateur 5 cesse de produire du courant, l'ensemble batterie 3-convertisseur DC/DC 4 devient alors le générateur principal utilisé en générateur de courant régulé en tension, il fournit alors complètement le courant requis par le réseau de bord 6 pour alimenter les consommateurs électriques et impose sa tension de consigne U_{ConsDC}, ce qui permet de maximiser la décharge de la batterie 3.

On peut avantageusement prévoir une diminution progressive de la tension de consigne U_{ConsAlt} de l'alternateur 5 en deçà de la consigne de tension, U_{ConsDC} à la sortie S du convertisseur DC/DC 4. Par exemple la diminution progressive peut respecter un gradient de tension déterminé, pour améliorer le ressenti client et la qualité réseau de bord.

Cette étape 120 de gestion de la décharge de la batterie 3 permet d'éviter la coupure des consommateurs électriques activés pendant les phases de coupure d'injection de carburant et de décharger la batterie 3 pour mieux la recharger pendant les phases d'injection et donc maximiser le couple prélevé. En effet, plus la batterie est chargée, moins elle prend de courant pour se recharger. Le fait de la décharger nous permet donc d'appliquer de nouveau une recharge pour prélever du couple sur le moteur. En dehors de ce comportement, si la batterie 3 est chargée, la contribution du réseau de bord à la régénération du filtre à particules n'est pas optimale : on n'y contribue pas avec la batterie mais on y contribue toujours par les consommateurs électriques, donc dès que l'on peut, en l'occurrence dans l'invention, lors des phases de coupures d'injection de carburant, on décharge la batterie 3.

En revenant à la figure 2, dans le cas où une phase d'injection de carburant est détectée (entrée « Inj. » sur la figure 2), on entre à l'étape 130 de gestion de la recharge de la batterie 3.

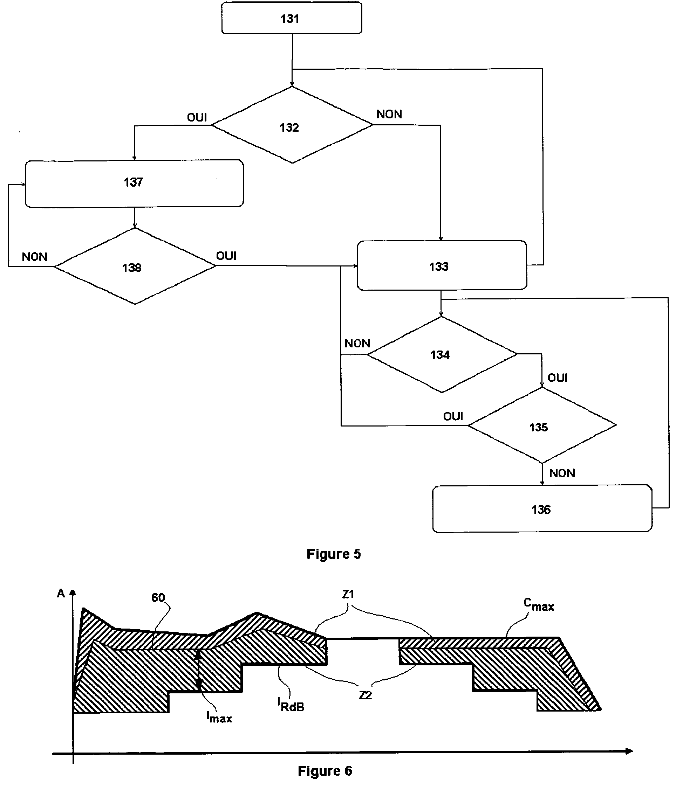

La figure 5 présente maintenant un logigramme plus détaillé de l'étape 130 de gestion de la recharge de la batterie 3 dans lequel l'étape 131 correspond à l'initialisation de l'étape 130.

Avant de recharger la batterie 3, il faut toutefois s'assurer que la batterie 3 a une bonne acceptance de charge (par exemple en fonction de son état de charge et de sa température) chargée et peut prendre du courant (et donc du couple au moteur).

On vérifie donc à l'étape 132 si la batterie 3 dispose d'une quantité d'énergie électrique Q_{bat} supérieur à un seuil haut maximum, Sₕₘₐₓ, de quantité d'énergie électrique, S_{c}, pour lequel on considère que la batterie 3 n'est plus apte à prendre du courant de recharge.

Dans le cas où la quantité d'énergie électrique Q_{bat} est inférieure au seuil haut maximum, Sₕₘₐₓ, de quantité d'énergie électrique, (branche NON partant de l'étape 132), on passe à l'étape 133 de recharge de la batterie 3, ce qui permet de prélever ainsi un couple supplémentaire au moteur thermique.

Plus précisément, afin de recharger la batterie 3, on détermine :
- pour le convertisseur DC/DC 4 une consigne de courant maximum, Iₘₐₓ, à envoyer à la batterie 3 inférieure à la différence entre la charge de courant maximum, Cₘₐₓ, de l'alternateur 5 et la charge c'est-à-dire le courant requis, I_{RdB}, par le réseau de bord 6,
- une consigne de tension, U_{ConsDC} à l'entrée E du convertisseur DC/DC 4 destinée à protéger la batterie 3 lors de la recharge. Avantageusement, la consigne de tension à l'entrée E du convertisseur DC/DC 4, U_{ConsDC}, correspond à la limite de tension au-delà de laquelle la batterie se dégrade. (dans le cas d'une batterie au plomb, au-delà de cette tension, l'électrolyte de la batterie s'électrolyse),
- une tension de consigne U_{ConsAlt} de l'alternateur 5 égale à la tension requise, U_{RdB}, par le réseau de bord 6.

Les moyens de contrôle 7 pilotent le convertisseur DC/DC 4 et l'alternateur 5 aux consignes déterminées. Dans ce cas, c'est donc l'alternateur 5 qui impose sa tension au réseau de bord 6.

De préférence encore, la consigne de courant maximum, Iₘₐₓ, est déterminée de manière à garantir un niveau de charge de l'alternateur 5 supérieur à un niveau de charge minimum S_{chmin}, d'aide à la régénération. Le niveau de charge minimum S_{chmin}, est par exemple de 60% de la charge de courant maximum, Cₘₐₓ, de l'alternateur 5. Ce niveau minimum assure un prélèvement minimum de couple au moteur lors de la phase de régénération. La consigne de courant maximum, Iₘₐₓ, est aussi déterminée de sorte à ne pas dépasser un premier seuil de niveau de charge haut, S_{chmax1}, par exemple 80% de la charge de courant maximum, Cₘₐₓ, de l'alternateur 5, qui permet de laisser une marge de charge de courant d'alternateur en cas de demande d'incrémentation du niveau de lestage, ceci afin de ne pas bloquer l'incrémentation du niveau de lestage.

La figure 6 reprend la figure 3 et illustre le gain de charge de courant réalisé par la recharge de la batterie 3. La courbe 60 représente la charge de courant des consommateurs électriques du réseau de bord, I_{RDB}, cumulée à celle du courant maximum, Iₘₐₓ, pour la recharge de la batterie 3. La zone hachurée Z2 représente le gain de charge de courant supplémentaire demandé à l'alternateur 5 en raison de la recharge de la batterie 3.

On comprend de la figure 6 que plus la charge du réseau de bord I_{RDB}, due à l'activation successive des consommateurs électriques augmente, plus la consigne de courant maximum, Iₘₐₓ, pour la recharge de la batterie 3 diminue : la consigne de courant maximum, Iₘₐₓ, évolue donc en dynamique.

Pendant les phases d'injection où normalement on recharge la batterie 3, on peut prévoir une mesure de sécurité dans le cas où l'activation supplémentaire d'un consommateur électrique prévu pour l'aide à la régénération entraine la saturation de l'alternateur 5, (c'est à dire que charge de courant demandée est alors supérieure à la charge de courant maximum Cₘₐₓ de l'alternateur 5), dans ce cas on peut prévoir une décharge afin de maintenir le niveau de charge requis par l'activation des consommateurs électriques et ainsi éviter la coupure d'un des consommateurs électriques.

Pour ce faire, on prévoit une étape 134 dans laquelle on vérifie si l'activation supplémentaire d'un consommateur électrique prévu pour l'aide à la régénération entraine le dépassement d'un second niveau de charge haut, S_{chmax2}. Le second niveau de charge haut, S_{chmax2}, est avantageusement supérieur au premier niveau de charge haut, S_{chmax1}, par exemple entre +5 et +10% si le premier niveau est à 80%, afin de d'avoir un hystéresis entre la charge et la décharge et de s'affranchir ainsi des passages intempestifs entre charge et décharge.

Dans l'affirmative (branche OUI partant de l'étape 134) on passe à l'étape 135 où l'on s'assure que la batterie 3 peut fournir du courant en vérifiant que la batterie 3 dispose d'une quantité d'énergie Q_{bat} supérieure au seuil critique de quantité d'énergie électrique, S_{c}.

Dans ce cas (branche OUI partant de l'étape 135) on décharge la batterie 3. A cet effet, on détermine:
- pour le convertisseur DC/DC 4 une consigne de courant maximum, Iₘₐₓ, égale à une fraction du courant requis, I_{RDB}, par le réseau de bord 6. Le courant requis, I_{RDB}, peut être mesuré ou estimé.
- une consigne de tension, U_{ConsDC} à la sortie S du convertisseur DC/DC 4 supérieure à la tension de consigne U_{ConsAlt} de l'alternateur 5 et,
- une tension de consigne U_{ConsAlt} de l'alternateur 5 égale à la tension requise, U_{RdB}, par le réseau de bord 6.

Les moyens de contrôle 7 pilotent le convertisseur DC/DC 4 et l'alternateur 5 aux consignes déterminées. L'alternateur 5 reste le générateur principal qui impose sa tension de consigne au réseau de bord.

Par ailleurs, en revenant à la figure 5, dans le cas où la batterie 3 dispose d'une quantité d'énergie électrique Q_{bat} supérieure au seuil haut maximum, Sₕₘₐₓ, (branche OUI partant de l'étape 132), il peut être prévu de décharger en partie la batterie 3. A cet effet, à l'étape 137 il est prévu de déterminer :
- pour le convertisseur DC/DC 4 une consigne de courant maximum, Iₘₐₓ, à envoyer au réseau de bord 6 égale à une fraction du courant requis, I_{RdB}, par le réseau de bord 6.
- une consigne de tension, U_{ConsDC} à la sortie S du convertisseur DC/DC 4 supérieure à la tension de consigne U_{ConsAlt} de l'alternateur 5 et,
- une tension de consigne U_{ConsAlt} de l'alternateur 5 égale à la tension requise, U_{RdB}, par le réseau de bord 6.

Les moyens de contrôle 7 pilotent le convertisseur DC/DC 4 et l'alternateur 5 aux consignes déterminées. La décharge de la batterie 3 est alors maintenue jusqu'à ce que (étape 138) par exemple la quantité d'énergie électrique Q_{bat} de la batterie 3 atteigne un seuil bas déterminé ou qu'une temporisation soit atteinte ou encore la baisse du niveau de charge de l'alternateur 5 pour lequel on considère que la batterie 3 est désormais apte à être rechargée.

Toutefois, si pendant cette étape 130 de gestion de recharge de la batterie, une phase de coupure d'injection de carburant est détectée (sortie « No Inj. » à l'étape 130 de la figure 2) on sort de l'étape 130, on cesse d'appliquer les consignes (étape 151) et on entre à l'étape 120 de gestion de la décharge de la batterie 3.

L'étape 170 concerne une étape de détection de demande de fin de phase de régénération. Dans le cas où une demande de fin de phase de régénération est détectée (branche OUI partant de l'étape 170), on sort de la procédure de l'étape 110 et on passe à l'étape 180 dans laquelle on cesse la phase de régénération.

Ainsi dans l'invention, dans la mesure du possible on décharge la batterie 3 pendant les coupures d'injection de carburant détectées pendant la phase de régénération et on charge la batterie 3 lors des phases d'injection de carburant détectées pendant la phase de régénération. L'invention permet une maîtrise du courant de recharge et de décharge de la batterie et donc d'avoir une meilleure gestion de la batterie pour contribuer à la régénération du filtre à particules.

## Revendications

1. Procédé de gestion de l'énergie électrique lors d'une phase de régénération d'un filtre placé dans la ligne d'échappement d'un moteur thermique équipant un véhicule muni d'un stockeur d'énergie électrique (3), un réseau de bord (6) comprenant des consommateurs électriques, un générateur (5) à tension de consigne continue modulable, un convertisseur DC/DC (4) comprenant une entrée (E) reliée au stockeur d'énergie électrique (3) ainsi qu'une sortie (S) reliée au réseau de bord (6) et au générateur (5), des moyens de contrôle (7) permettant de piloter le convertisseur DC/DC (4) ainsi que le générateur (5), dans lequel on active les consommateurs électriques du réseau de bord 6 afin d'augmenter la charge du moteur thermique, caractérisé en que l'on recharge le stockeur (3) en phase d'injection de carburant et l'on décharge le stockeur (3) en phase de coupure d'injection de carburant.

2. Procédé selon la revendication 1, **caractérisé en ce que** l'on décharge le stockeur (3) en phase de coupure d'injection de carburant si sa quantité d'énergie électrique (Q_{bat}) disponible est supérieure à un seuil critique (S_{c}) de quantité d'énergie électrique.

3. Procédé selon la revendication 1 ou la revendication 2, **caractérisé en ce qu'**en cas de décharge en phase de coupure d'injection on détermine pour le convertisseur DC/DC (4) une consigne de courant maximum (Iₘₐₓ) supérieure au courant requis (I_{Rdb}) par le réseau de bord (6), une consigne de tension (U_{ConsDC}) à la sortie (S) du convertisseur DC/DC (4) égale à la tension requise (U_{RdB}) par le réseau de bord (6) et une tension de consigne (U_{ConsAlt}) du générateur (5) inférieure à la tension de consigne (U_{ConsDC}) du convertisseur DC/DC (4).

4. Procédé selon la revendication 3, **caractérisé en ce que** l'on diminue progressivement la tension de consigne (U_{ConsAlt}) du générateur (5) en deçà de la consigne de tension (U_{ConsDc}) du convertisseur DC/DC (4).

5. Procédé selon l'une des revendications précédentes, **caractérisé en ce que** l'on recharge le stockeur (3) en phase d'injection de carburant si sa quantité d'énergie électrique (Q_{bat}) disponible est inférieure à un seuil haut maximum (Sₕₘₐₓ) de quantité d'énergie électrique pour lequel on considère que ledit stockeur (3) n'est plus apte à la recharge.

6. Procédé selon la revendication 5, **caractérisé en ce qu'**en cas de recharge du stockeur (3) en phase d'injection de carburant on détermine pour le convertisseur DC/DC (4) une consigne de courant maximum (Iₘₐₓ) à envoyer à la batterie (3) inférieure à la différence entre la charge de courant maximum (Cₘₐₓ) du générateur (5) et le courant requis (I_{RdB}) par le réseau de bord (6), une consigne de tension, (U_{ConsDc}) à l'entrée (E) du convertisseur DC/DC (4) destinée à protéger la batterie (3) lors de la recharge ,une tension de consigne (U_{ConsAlt}) du générateur (5) égale à la tension requise (U_{RdB}) par le réseau de bord (6).

7. Procédé selon la revendication 6, **caractérisé en ce que** la consigne de courant maximum (Iₘₐₓ) est déterminée de sorte à garantir aussi un niveau de charge du générateur (5) compris entre un niveau de charge minimum (S_{chmin}) et un premier niveau de charge haut (S_{chmax1}).

8. Procédé selon la revendication 7, **caractérisé en ce que** dans le cas où l'activation supplémentaire d'un consommateur électrique prévu pour l'aide à la régénération entraine le dépassement d'un second niveau de charge haut, (S_{chmax2}), on effectue une décharge du stockeur (3).

9. Procédé selon la revendication 8, **caractérisé en ce que** le second niveau de charge haut (S_{chmax2}) est supérieur au premier niveau de charge haut (S_{chmax1}).

10. Procédé selon l'une quelconque des revendications 5 à 9, **caractérisé en ce que** si le stockeur (3) dispose d'une quantité d'énergie électrique (Q_{bat}) supérieure au seuil haut maximum (Sₕₘₐₓ), on décharge en partie le stockeur (3).

11. Véhicule (1) équipé d'une architecture électrique (2) comprenant un stockeur d'énergie électrique (3), un réseau de bord (6), un générateur (5) à tension de consigne (U_{ConsAlt}) continue modulable, un convertisseur DC/DC (4) comprenant une entrée (E) reliée au stockeur d'énergie électrique (3) ainsi qu'une sortie (S) reliée au réseau de bord (6) et au générateur (5), des moyens de contrôle (7) du convertisseur DC/DC (4) ainsi que du générateur (5), **caractérisé en ce que** les moyens (7) sont configurés pour la mise en oeuvre du procédé selon l'une des revendications précédentes.

## Patentansprüche

1. Verfahren zur Verwaltung der elektrischen Energie bei einer Regenerierungsphase eines Filters, das in dem Abgasstrang einer Brennkraftmaschine platziert ist, die ein Fahrzeug ausstattet, das mit einem Stromspeicher (3), einem Bordnetzwerk (6), das Stromverbraucher umfasst, einem Generator (5) mit laufend modulierbarer Sollspannung, einem Gleichstrom/Gleichstrom-Wandler (4), der einen Eingang (E) umfasst, der mit dem Stromspeicher (3) verbunden ist, sowie einem Ausgang (S), der mit dem Bordnetzwerk (6) und dem Generator (5) verbunden ist, Steuermitteln (7), die das Steuern des Gleichstrom-/Gleichstrom-Wandlers (4) sowie des Generators (5) erlauben, versehen ist, wobei man die Stromverbraucher des Bordnetzwerks (6) aktiviert, um die Last der Brennkraftmaschine zu erhöhen, **dadurch gekennzeichnet, dass** man den Speicher (3) in Kraftstoffeinspritzphase auflädt und den Speicher (3) in Kraftstoffeinspritzabschaltphase entlädt.

2. Verfahren nach Anspruch 1, **dadurch gekennzeichnet, dass** man den Speicher (3) in Kraftstoffeinspritzabschaltphase entlädt, falls seine verfügbare Strommenge (Q_{bat}) größer ist als ein kritischer Strommengenschwellenwert (S_{c}).

3. Verfahren nach Anspruch 1 oder Anspruch 2, **dadurch gekennzeichnet, dass** man im Fall des Entladens in der Einspritzabschaltphase für den Gleichstrom-Gleichstrom-Wandler (4) einen maximalen Stromsollwert (Iₘₐₓ), der größer ist als von dem Bordnetzwerk (6) geforderter Strom (I_{RdB}), eine Sollspannung (U_{ConsDC}) an dem Ausgang (S) des Gleichstrom-Gleichstrom-Wandlers (4) gleich der von dem Bordnetzwerk (6) geforderten Spannung (U_{RdB}) und eine Sollspannung (U_{ConsAlt}) des Generators (5) kleiner als die Sollspannung (U_{ConsDC}) des Gleichstrom-Gleichstrom-Wandlers (4) bestimmt.

4. Verfahren nach Anspruch 3, **dadurch gekennzeichnet, dass** man die Sollspannung (U_{ConsAlt}) des Generators (5) unterhalb der Sollspannung (U_{ConsDC}) des Gleichstrom-Gleichstrom-Wandlers (4) verringert.

5. Verfahren nach einem der vorhergehenden Ansprüche, **dadurch gekennzeichnet, dass** man den Speicher (3) in der Kraftstoffeinspritzphase auflädt, falls seine verfügbare Strommenge (Q_{bat}) niedriger ist als ein maximaler oberer Schwellenwert (Sₕₘₐₓ) an Strommenge, für die angenommen wird, dass der Speicher (3) zum Aufladen nicht mehr fähig ist.

6. Verfahren nach Anspruch 5, **dadurch gekennzeichnet, dass** man in dem Fall des Aufladens des Speichers (3) in Kraftstoffeinspritzphase für den Gleichstrom-Gleichstrom-Wandler (4) einen maximalen Stromsollwert (Iₘₐₓ) festlegt, der zu der Batterie (3) zu senden ist, der kleiner ist als der Unterschied zwischen der maximalen Stromladung (Cₘₐₓ) des Generators (5) und dem von dem Bordnetzwerk (6) geforderten Strom (I_{RdB}), eine Sollspannung (U_{ConsDC}) an dem Eingang (E) des Gleichstrom-Gleichstrom-Wandlers (4), die dazu bestimmt ist, die Batterie (3) beim Aufladen zu schützen, eine Sollspannung (U_{ConsAlt}) des Generators (5) gleich der von dem Bordnetzwerk (6) geforderten Spannung (U_{RdB}) festlegt.

7. Verfahren nach Anspruch 6, **dadurch gekennzeichnet, dass** der maximale Stromwert (Iₘₐₓ) derart bestimmt wird, dass auch ein Ladepegel des Generators (5), der zwischen einem minimalen Ladepegel (S_{chmin}) und einem ersten oberen Ladepegel (S_{chmax1}) liegt, garantiert ist.

8. Verfahren nach Anspruch 7, **dadurch gekennzeichnet, dass** man in dem Fall, in dem das zusätzliche Aktivieren eines Stromverbrauchers, der zum Unterstützen der Regenerierung vorgesehen ist, das Überschreiten eines zweiten oberen Ladepegels (S_{chmax2}) bewirkt, ein Entladen des Speichers (3) ausführt.

9. Verfahren nach Anspruch 8, **dadurch gekennzeichnet, dass** der zweite obere Ladepegel (S_{chmax2}) höher ist als der erste obere Ladepegel (S_{chmax1}).

10. Verfahren nach einem der Ansprüche 5 bis 9, **dadurch gekennzeichnet, dass**, falls der Speicher (3) über eine Strommenge (Q_{bat}) verfügt, die höher ist als der maximale obere Schwellenwert (S_{chmax}), man den Speicher (3) teilweise entlädt.

11. Fahrzeug (1), das mit einem elektrischen Aufbau (2) ausgestattet ist, der einen Stromspeicher (3), ein Bordnetzwerk (6), einen Generator (5) mit laufend modulierbarer Sollspannung (U_{ConsAlt}), einen Gleichstrom-/Gleichstrom-Wandler (4), der einen Eingang (E) umfasst, der mit dem Stromspeicher (3) verbunden ist, sowie einen Ausgang (S), der mit dem Bordnetzwerk (6) und dem Generator (5) verbunden ist, Steuermittel (7) des Gleichstrom-Gleichstrom-Wandlers (4) sowie des Generators (5) umfasst, **dadurch gekennzeichnet, dass** die Mittel (7) für das Umsetzen des Verfahrens nach einem der vorhergehenden Ansprüche konfiguriert sind.

## Claims

1. A method for managing the electricity during a regeneration phase of a filter placed in the exhaust line of a heat engine equipping a vehicle provided with an electricity storage device (3), an on-board network (6) including electrical consumers, a generator (5) of a variable DC set voltage, and a DC/DC converter (4) including an input (E) connected to the electricity storage device (3) and an outlet (S) connected to the on-board network (6) and to the generator (5), wherein control means (7) enable the DC/DC converter (4) and the generator (5) to be controlled, in which the electrical consumers of the on-board network (6) are actuated so as to increase the load of the heat engine, **characterized in that** the storage device (3) is recharged during the fuel injection phase, and the storage device (3) is discharged during the fuel injection cutoff phase.

2. The method according to Claim 1, **characterized in that** the storage device (3) is discharged during the fuel injection cutoff phase if its available amount of electrical energy (Q_{bat}) is greater than a critical electrical energy amount threshold (S_{c}).

3. The method according to Claim 1 or Claim 2, **characterized in that** in the case of discharge during the injection cutoff phase, there is determined for the DC/DC converter (4) a maximum current setpoint (Iₘₐₓ) greater than the required current (I_{Rdb}) by the on-board network (6), a voltage setpoint (U_{ConsDC}) at the output (S) of the DC/DC converter (4) equal to the required voltage (U_{RdB}) by the on-board network (6) and a setpoint voltage (U_{ConsAlt}) of the generator (5) lower than the setpoint voltage (U_{ConsDC}) of the DC/DC converter (4).

4. The method according to Claim 3, **characterized in that** the setpoint voltage (U_{ConsAlt}) of the generator (5) is reduced progressively below the voltage setpoint (U_{ConsDc}) of the DC/DC converter (4).

5. The method according to one of the preceding claims, **characterized in that** the storage device (3) is recharged during the fuel injection phase if its available amount of electrical energy (Q_{bat}) is lower than a maximum upper threshold (Sₕₘₐₓ) of the amount of electrical energy for which it is considered that said storage device (3) is no longer capable of recharging.

6. The method according to Claim 5, **characterized in that** in the case of recharging of the storage device (3) during the fuel injection phase, there is determined for the DC/DC converter (4) a maximum current setpoint (Iₘₐₓ) to be sent to the battery (3) lower than the difference between the maximum current charge (Cₘₐₓ) of the generator (5) and the required current (I_{RdB}) by the on-board network (6), a voltage setpoint, (U_{ConsDC}) at the input (E) of the DC/DC converter (4) intended to protect the battery (3) during the recharging, a setpoint voltage (U_{ConsAlt}) of the generator (5) equal to the required voltage (U_{RdB}) by the on-board network (6).

7. The method according to Claim 6, **characterized in that** the maximum current setpoint (Iₘₐₓ) is determined so as to also guarantee a charge level of the generator (5) comprised between a minimum charge level (S_{chmin}) and a first upper charge level (S_{chmax1}).

8. The method according to Claim 7, **characterized in that** in the case where the additional activation of an electrical consumer provided to assist the regeneration brings about the exceeding of a second upper charge level, (S_{chmax2}), a discharge of the storage device (3) is carried out.

9. The method according to Claim 8, **characterized in that** the second upper charge level (S_{chmax2}) is greater than the first upper charge level (S_{chmax1}).

10. The method according to any one of Claims 5 to 9, **characterized in that** if the storage device (3) has an amount of electrical energy (Q_{bat}) greater than the maximum upper threshold (Sₕₘₐₓ), the storage device (3) is partly discharged.

11. A vehicle (1) equipped with an electrical architecture (2) including an electricity storage device (3), an on-board network (6), a generator (5) of variable DC set voltage (U_{ConsAlt}), a DC/DC converter (4) including an input (E) connected to the electricity storage device (3) and an outlet (S) connected to the on-board network (6) and to the generator (5), control means (7) of the DC/DC converter (4) and of the generator (5), **characterized in that** the means (7) are configured for the implementation of the method according to one of the preceding claims.
